# EUROPEAN PATENT APPLICATION

(11) **EP 1 895 688 A1**
(43) Date of publication of application: **05.03.2008**
(21) Application number: 07112684.1
(22) Date of filing: 18.07.2007
(51) Int. Cl.: H04B 10/12, H04Q 7/30, H04J 3/06

(54) **Radio over fibre system and method for controlling transmission time**

(30) Priority: 31.08.2006 KR 20060083835
(71) Applicant: Samsung Electronics Co., Ltd., Suwon-si, Gyeonggi-Do (KR)
(72) Inventor: KIM, Sang-Ho, Gyeonggi-do (KR); OH, Yun-Je, Gyeonggi-do (KR); HWANG, Seong-Taek, Gyeonggi-do (KR); CHO, Jae-Hun, Gyeonggi-do (KR); LEE, Jae-Hoon, Gyeonggi-do (KR)
(74) Representative: Grünecker, Kinkeldey, Stockmair & Schwanhäusser Anwaltssozietät

(57) **Abstract**

A radio-over-fiber (RoF) system and method for controlling a transmission time is provided. In a Time Division Duplex (TDD) wireless communication system comprising a Base Station (BS) having a donor and a remote connected thereto via am optical fiber, upstream and downstream Radio Frequency (RF) signals are transmitted and received, and by reliably transmitting a switch control signal to the remote and simultaneously compensating for a transmission time delay occurring in the optical cable, time synchronization of the upstream and downstream RF signals transmitted and received via antennas of the BS and the remote is controlled, thereby efficiently increasing the performance of a TDD wireless service system.

## Description

The present invention relates generally to a radio-over-fiber (RoF) system and method for controlling time synchronization of upstream and downstream Radio Frequency (RF) signals transmitted and received through antennas of a remote and a Base Station (BS).

A rapid development in computer, electronic, and communication technologies allows various wireless communication services via wireless networks. The most basic wireless communication service is a voice call service to mobile terminal users. A short message service has also been provided to complement the voice call service, and further a wireless Internet service has been recently introduced to provide an Internet communication service.

There are various standards in communication fields, such as International Mobile Telecommunication 2000 (IMT-2000), e.g. Code Division Multiple Access (CDMA), Evolution Data Optimized (EV-DO), Wideband CDMA (WCDMA), which is a 3^{rd} generation (3G) mobile communication system standardized by International Telecommunications Union, and Radio communication sector (ITU-R). IMT-2000 is a mobile communication system introduced to realize worldwide direct roaming with a call quality of the same level as that of wired telephones, a high-speed packet data service, various application services by means of the combination of wired and wireless networks, and the like, and formed to increase the quality of existing voice and Wireless Application Protocol (WAP) services and provides various multimedia services (Audio On Demand (AOD), Video On Demand (VOD), and the like) at a higher rate.

However, since the construction costs for a base station in the existing mobile communication systems are high, users must pay to use a wireless Internet service. Also since the screen size of mobile communication terminals is small, content to be displayed and used are limited, thus the existing mobile communication systems are limited in providing an ultra-high speed wireless Internet service. In addition, Wireless Local Area Network (WLAN) technology is limited to provide a public service due to electronic wave interference and narrow coverage. In order to address these problems, Wireless Broadband Internet (WiBro) and 4G mobile communication systems for an ultra-high speed portable Internet service have been introduced to provide the ultra-high speed wireless Internet service with portability, mobility, and low fees.

Unlike CDMA or WCDMA, the WiBro and 4G mobile communication systems use the portable Internet technology using a TDD scheme as a duplex method and an Orthogonal Frequency Division Multiplexing (OFDM) scheme as a modulation method.

The TDD scheme is a bi-directional transmission method of alternatively assigning an uplink and a downlink in the same frequency band in a time domain. Compared to a Frequency Division Duplex (FDD) method in which two different frequencies are respectively assigned to the uplink and the downlink, the TDD scheme provides a higher transmission efficiency and is much more suitable for the transmission of an asymmetric or bursty application due to dynamic allocation of time slots. The OFDMA/Time Division Multiple Access (TDMA) method is a multiple access method similar to a TDMA in which all subcarriers of the entire bandwidth are assigned to a user for a predetermined time and to another user for a next predetermined time. It, and also increase a transmission rate per bandwidth and prevents multipath interference.

Despite the efforts to improve a mobile communication service by adjusting a cell radius according to the frequency reuse concept and a traffic amount, propagation shadow areas, such as the underground, the inside of buildings, and tunnels, exist in many downtown areas. Construction of a plurality of new BSs to solve propagation shadow in the propagation shadow areas may result in considerably low economic efficiency due to high construction, installation, and maintenance costs. In order to address these problems, the mobile communication service in the propagation shadow areas may be provided using an optical repeater system. The optical repeater system clears the propagation shadow problem by transmitting a call channel assigned to a mother BS to a propagation shadow area by means of an optical transmission method using an optical repeater.

In particular, since 3G mobile communication systems and WiBro systems have higher propagation path loss, lower diffraction effect, and higher building transmission loss than 2G mobile communication systems as it uses a higher frequency, and the cell radius is relatively smaller. Thus, it is preferable that an optical repeater is used.

In order for an optical repeater to relay a wireless signal between a BS and a terminal, the optical repeater must be able to distinguish an upstream signal from a downstream signal. When an optical repeater in a mobile communication system uses the FDD scheme, the optical repeater can distinguish an upstream signal from a downstream signal using a duplexer. However, when an optical repeater in a mobile communication system uses the TDD scheme, the optical repeater uses the same frequency to transmit upstream and downstream signals and distinguishes an upstream signal from a downstream signal by splitting the time duration. As a result, the optical repeater cannot distinguish the upstream signal from the downstream signal using a duplexer. Thus, the optical repeater using the TDD scheme can distinguish an upstream signal from a downstream signal using a switch and selectively provide a path of each signal. To do this, a control signal is required to switch the path of each signal by correctly determining a start point of a downstream signal and a start point of an upstream signal and controlling open/close of the switch according to each signal. The optical repeater can receive the control signal from a BS via an optical cable.

The optical repeater using the TDD scheme must have a function of generating a switch control signal for controlling the switch by analyzing transmitted signal frames in order to cause a switching operation between a downstream signal duration and an upstream signal duration. Since the optical repeater transmits a signal via the optical cable, a time delay may occur during the signal transmission. If the time delay in the optical cable is not reflected to the switch control signal, an incorrect switch control signal may be generated, thereby causing a downstream signal not to be correctly distinguished from an upstream signal.

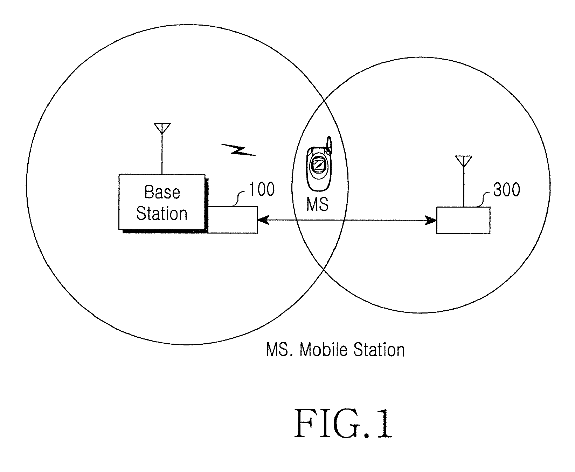

Korean Patent Publication No. 2006-0010963 (Title: Method and System for Generating Switching Timing Signal for Separating Transmitting and Receiving Signal in Optical Repeater of Mobile Telecommunication Network Using TDD and OFDM Modulation) can be an example as a solution of this problem. However, as illustrated in FIG. 1, a Mobile Station (MS) receives a signal directly received from a BS and a signal received via a donor 100 and a remote 300 as multipath signals. In this case, since inter-symbol interference between the two signals occurs if a time delay difference between the two signals exceeds a cyclic prefix time of an OFDMA symbol, a data error rate increases when OFDMA symbols are demodulated. Further, it is difficult to control the time synchronization of RF signals transmitted and received to and from the BS and the remote 300.

The present invention substantially solves at least the above problems and/or disadvantages and provides at least the advantages below. Accordingly, the object of the present invention is to control time synchronization of upstream and downstream Radio Frequency (RF) signals transmitted and received via antennas of a Base Station (BS) and a remote by reliably transmitting a control signal to the remote and compensating for a delay of a transmission time occurring in an optical cable in a Time Division Duplex (TDD) wireless communication system comprising a donor of the BS and the remote connected via the optical cable.

This object is solved by the subject matter of the independent claims.

Preferred embodiments are defined in the dependent claims.

An aspect of the present invention is to efficiently increase the performance of a TDD wireless communication system by controlling time synchronization between signals transmitted and received through an RF switch included in each of a BS and a remote.

In one embodiment, there is provided a Radio over Fiber (RoF) system in a TDD wireless communication system comprising a donor of a BS and a remote connected via an optical cable. The RoF system includes: an antenna for transmitting and receiving upstream and downstream RF signals of the TDD method; a first RF switch for setting an upstream or downstream RF signal path via the antenna; an RF transmit/receive amplifier for amplifying the downstream RF signal, reducing a noise component of the upstream RF signal, and amplifying a signal component of the upstream RF signal when the downstream RF signal path is set by the first RF switch; a time delay unit for delaying the upstream or downstream RF signal by compensating the synchronization of a transmission time of the upstream or downstream RF signal; a modem for generating a switch control signal to be used to set the upstream or downstream RF signal path and performing TDD data communication; the donor for transmitting the switch control signal generated by the modem and the downstream RF signal to the remote, receiving the upstream RF signal from the remote, and measuring and controlling a delay time of an optical signal transmitted via the optical cable; and the remote for re-transmitting a signal used to measure the delay time of the optical signal to the donor and setting a path of the upstream or downstream RF signal according to the switch control signal received from the donor.

The above features and advantages of the present invention will become more apparent from the following detailed description when taken in conjunction with the accompanying drawing in which:
FIG. 1 is a schematic configuration diagram of a TDD mobile communication system;
FIG. 2 is a block diagram of a Radio over Fiber (RoF) system in a TDD mobile communication system according to an embodiment of the present invention;
FIG. 3 is a block diagram of a time delay measurement module according to an embodiment of the present invention; and
FIG. 4 is a flowchart illustrating a method of controlling a transmission time in a TDD-based RoF system according to an embodiment of the present invention.

Hereinafter, embodiments of the present invention will be described herein below with reference to the accompanying drawings. In the drawings, the same or similar elements are denoted by the same reference numerals even though they are depicted in different drawings. For the purposes of clarity and simplicity, well-known functions or constructions are not described in detail as they would obscure the invention in unnecessary detail.

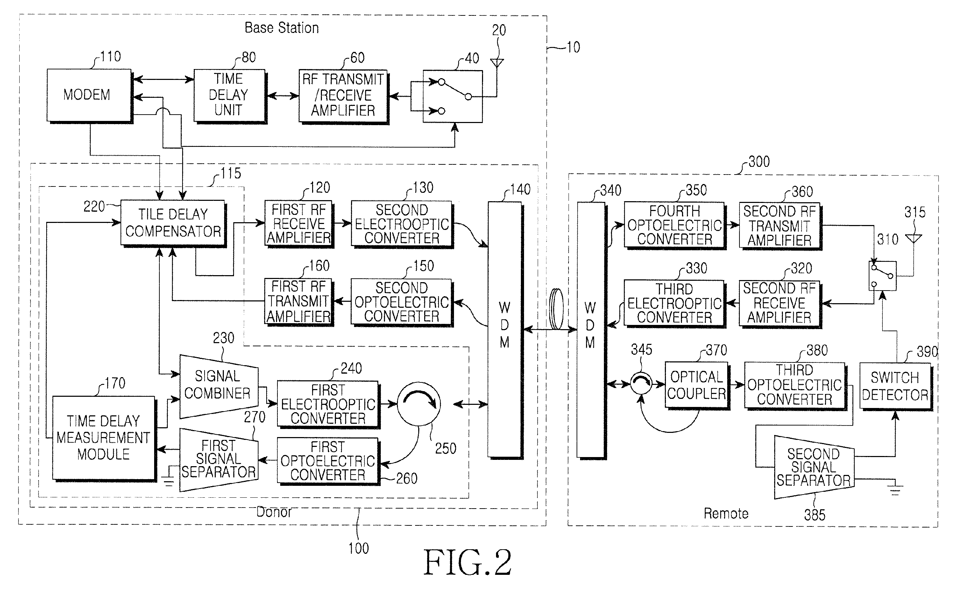

FIG. 2 is a block diagram of a Radio over Fiber (RoF) unit of a Time Division Duplex (TDD) mobile communication system according to an embodiment of the present invention.

In operation, the RoF system performs a bi-directional communication by separating a downstream Radio Frequency (RF) signal and an upstream RF signal through time division of the same frequency. Referring to FIG. 2, the RoF system includes a remote unit 300 and a Base Station 10, which includes an antenna 20, a first RF switch 40, an RF transmit/receive amplifier 60, a time delay unit 80, a modem 110, and a donor 100.

When a TDD-based downstream RF signal is input via the antenna 20, the first RF switch 40 of the BS 10 sets a downstream RF signal path to provide the downstream RF signal to the donor 100 of the BS. When a TDD-based upstream RF signal is input from the donor 100 via the modem 110, the first RF switch 40 sets an upstream RF signal path to emit the upstream RF signal via the antenna 20. Thus, the first RF switch 40 is configured to selectively set the upstream or downstream RF signal path according to a switch control signal received from the modem 110.

When the downstream RF signal path is set by the first RF switch 40, the RF transmit/receive amplifier 60 amplifies the downstream RF signal to an effective power of the downstream RF signal in order to transmit the downstream RF signal, then outputs the amplified downstream RF signal to the time delay unit 80. The RF transmit/receive amplifier 60 also reduces a noise component of the upstream RF signal input from the modem 110, amplifies a signal component of the upstream RF signal, and then outputs the upstream RF signal to the first RF switch 40. Thereafter, the first RF switch 40 sets the upstream RF signal path to emit the upstream RF signal via the antenna 20.

The time delay unit 80 delays the upstream and downstream RF signals transmitted and received between the donor 100 of the BS 10 and the remote 300 by compensating the transmission time synchronization of the upstream and downstream RF signals.

The modem 110 transmits the TDD-based upstream and downstream RF signals by separating the upstream and downstream RF signals and generates a switch control signal for controlling the first RF switch 40 of the BS 10 and a second RF switch 310 of the remote 300.

The donor 100 electrooptic converts the downstream RF signal received from the modem 110 to an optical signal and transmits the optical signal to the remote 300 via an optical cable, and also optoelectric converts an optical signal received from the remote 300 to an upstream RF signal and transmits the upstream RF signal to the modem 110.

The remote 300 optoelectric converts an optical signal received from the donor 100 to a downstream RF signal and emits the downstream RF signal to the air via an antenna 315, and electrooptic converts an upstream RF signal received from the air via the antenna 315 to an optical signal and transmits the upstream RF signal to the donor 100.

The donor 100 may include a first RF receive amplifier 120, a second electrooptic converter 130, a first Wavelength Division Multiplexer/Demultiplexer (WDM) 140, a second electrooptic converter 150, and a time delay control module 115.

The remote 300 may include the second RF switch 310, a second RF receive amplifier 320, a third electrooptic converter 330, a second WDM 340, a fourth optoelectric converter 350, a second RF transmit amplifier 360, a second optical circulator 345, an optical coupler 370, a third optoelectric converter 380, a second signal separator 385, and a switch detector 390.

The donor 100 of the RoF system can expand the coverage of the BS 10 by being connected to a plurality of remotes 300 via optical cables.

Each of the first and second WDMs 140 and 340 is a device for allowing an optical fiber channel to be used as a plurality of communication paths by dividing the optical fiber channel into a plurality of channels based on the wavelength of light and operates as a Wavelength Division Multiplexer for transmitting a plurality of optical wavelength signals by carrying them on a single optical fiber or as a Wavelength Division Demultiplexer for demultiplexing an optical signal to a plurality of optical wavelength signals. Note that the electrooptic converters used in the RoF unit may be implemented using a laser diode, and the optoelectric converters used in the RoF unit may be implemented using a photo diode.

A signal transmission process in forward and backward channels will now be described using the components of the RoF unit.

In the case of a forward channel transmission, the downstream RF signal path is set by the first RF switch 40 so that a TDD-based downstream RF signal input via the antenna 20 is provided to the donor 100, and the downstream RF signal input via the antenna 20 is transmitted to the RF transmit/receive amplifier 60. The first RF switch 40 sets the downstream RF signal path according to the switch control signal input from the modem 110. When the first RF switch 40 sets the downstream RF signal path, the RF transmit/receive amplifier 60 amplifies the downstream RF signal and transmits the downstream RF signal to the time delay unit 80, and the time delay unit 80 compensates for synchronization of the downstream RF signal with respect to a transmission time between the donor 100 and the remote 300, and transmits the downstream RF signal to the modem 110. The modem 110 transmits the TDD-based downstream RF signal input from the time delay unit 80 to the donor 100 by distinguishing it from an upstream RF signal and generates the switch control signal for controlling the first RF switch 40 of the BS and the second RF switch 310 of the remote 300.

The downstream RF signal transmitted from the modem 110 is input to the first RF receive amplifier 120 of the donor 100. The first RF receive amplifier 120 reduces a noise component of the downstream RF signal, amplifies a signal component of the downstream RF signal, and transmits the downstream RF signal to the second electrooptic converter 130. The second electrooptic converter 130 electrooptic converts the downstream RF signal to an optical signal and transmits the optical signal to the first WDM 140. The first WDM 140 transmits the optical signal input from the second electrooptic converter 130 to the remote 300 via an optical cable.

The optical signal transmitted from the second electrooptic converter 130 of the donor 100 is input to the fourth optoelectric converter 350 via the second WDM 340 of the remote 300, optoelectric converted to the downstream RF signal by the fourth optoelectric converter 350, and provided to the second RF transmit amplifier 360. The second RF transmit amplifier 360 of the remote 300 amplifies the downstream RF signal to effective power to emit it via the antenna 315 and outputs the downstream RF signal to the second RF switch 310. The second RF switch 310 sets the downstream RF signal path according to the switch control signal input from the modem 110 so that the downstream RF signal is emitted to the air via the antenna 315.

In the case of the backward channel transmission, a TDD-based upstream RF signal received via the antenna 315 of the remote 300 is input to the second receive RF amplifier 320 through the upstream RF signal path set by the second RF switch 310 according to the switch control signal input from the modem 110. The second receive RF amplifier 320 reduces a noise component of the upstream RF signal, amplifies a signal component of the upstream RF signal, and transmits the upstream RF signal to the third electrooptic converter 330. The third electrooptic converter 330 electrooptic converts the upstream RF signal to an optical signal and transmits the optical signal to the second WDM 340. The second WDM 340 transmits the optical signal input from the third electrooptic converter 330 to the donor 100 via an optical cable.

The optical signal transmitted from the remote 300 is input to the second optoelectric converter 150 via the first WDM 140 of the donor 100, optoelectric converted to the upstream RF signal by the second optoelectric converter 150, and provided to the first RF transmit amplifier 160.

The first RF transmit amplifier 160 amplifies the upstream RF signal optoelectric converted by the second optoelectric converter 150 to an effective power to emit it via the antenna 20 and outputs the upstream RF signal to the modem 110. The modem 110 transmits the TDD-based upstream RF signal input from the first RF transmit amplifier 160 to the time delay unit 80. The time delay unit 80 compensates for (delays) synchronization of the upstream RF signal with respect to a transmission time between the donor 100 and the remote 300, and transmits the upstream RF signal to the first RF switch 40. The first RF switch 40 sets the upstream RF signal path according to the switch control signal input from the modem 110 so that the upstream RF signal is emitted to the air via the antenna 20.

The time delay control module 115 of the donor 100 generates a reference signal based on a specific time in order to measure a delay time of the optical cable, combines the reference signal and the switch control signal generated by the modem 110 to set the path of the upstream or downstream RF signal received from or transmitted to the remote 300, electrooptic converts the combined signal to an optical signal using a first electrooptic converter 240, and transmits the optical signal to the second optical circulator 345 of the remote 300 via the first and second WDM 140 and 340.

The second optical circulator 345 of the remote 300 transmits the optical signal input from the second WDM 340 to the optical coupler 370 by transmitting it only in a desired transmission direction by means of isolation from other directions.

The optical coupler 370 outputs the optical signal to the third optoelectric converter 380 without any change. The third optoelectric converter 380 optoelectric converts the optical signal to an electrical signal and transmits the electrical signal to the second signal separator 385. The second signal separator 385 separates the reference signal, which is used to measure the delay time of the optical cable, and the switch control signal, which was generated by the modem 110 to set the path of the upstream or downstream RF signal received from or transmitted to the remote 300, from the electrical signal, and transmits the reference signal and the switch control signal to the switch detector 390. The switch detector 390 detects the switch control signal for controlling the second RF switch 310 of the remote 300.

The optical coupler 370 of the remote 300 also separates a portion of the optical signal and transmits the portion of the optical signal to the second optical circulator 345, so that it is transmitted by the second optical circulator 345 in the reverse direction of the transmission direction of the optical signal. The optical signal output from the second optical circulator 345 is re-transmitted to the time delay control module 115 of the donor 100 via the first and second WDM 140 and 340. The optical signal re-transmitted to the time delay control module 115 is optoelectric converted to an electrical signal by a first optoelectric converter 260, and the time delay control module 115 measures the electrical signal re-transmitted from the optical coupler 370 and compares a reception time of the electrical signal to a transmission time of the reference signal generated based on the specific time. Thereafter, the time delay control module 115 generates a time delay control signal according to a difference between the time of the re-transmitted and measured signal and the generated time of the reference signal.

The second RF switch 310 selectively sets the upstream or downstream RF signal path by controlling open/close thereof according to the switch control signal detected by the switch detector 390. Thus, when a downstream RF signal is input from the second RF transmit amplifier 360 of the remote 300, the second RF switch 310 sets the downstream RF signal path so that the downstream RF signal is emitted to the air via the antenna 315. When an upstream RF signal is input via the antenna 315, the second RF switch 310 sets the upstream RF signal path so that the upstream RF signal is transmitted to the second RF receive amplifier 320 of the remote 300.

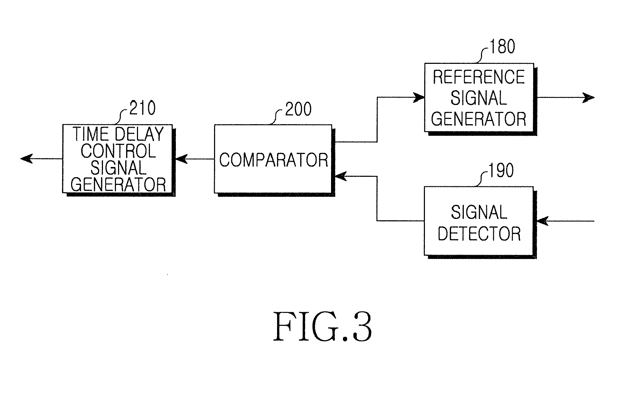

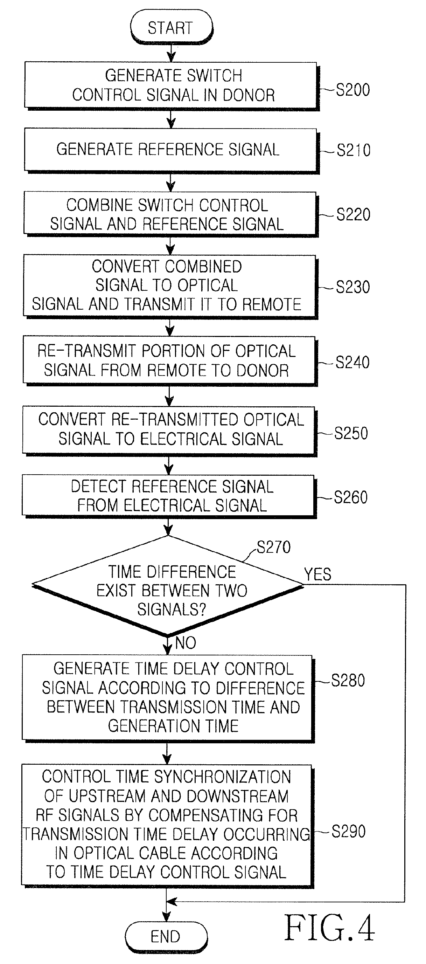

FIG. 3 is a block diagram of a time delay measurement module 170 according to an embodiment of the present invention, and FIG. 4 is a flowchart illustrating a method of controlling the transmission time in a TDD-based RoF system according to an embodiment of the present invention.

As illustrated in FIG. 3, the time delay control module 115 according to the embodiment of the present invention may include a time delay measurement module 170, which includes a reference signal generator 180, a signal detector 190, a comparator 200, and a time delay control signal generator 210; a time delay compensator 220; a signal combiner 230; the first electrooptic converter 240; a first optical circulator 250; the first optoelectric converter 260; and a first signal separator 270.

A process of compensating the transmission time delay using the components of the time delay control module 115 will now be described in detail with reference to FIG. 4.

In step S200, the modem 110 generates the switch control signal for setting the TDD-based upstream or downstream RF signal path and transmits the switch control signal to the time delay compensator 220. In step S210, the reference signal generator 180 of the time delay measurement module 170 generates the reference signal based on the specific time in order to measure the delay time of the optical cable and transmits the reference signal to the signal combiner 230.

The signal combiner 230 combines the switch control signal for setting the TDD-based upstream or downstream RF signal path and the reference signal generated by the reference signal generator 180 in step S220, the first electrooptic converter 240 electrooptic converts the combined signal to an optical signal, and the first optical circulator 250 transmits the optical signal input from the first electrooptic converter 240 to the second optical circulator 345 of the remote 300 via the first and second WDM 140 and 340 by isolating the optical signal from other directions different from a desired transmission direction in step S230.

The second optical circulator 345 of the remote 300 transmits the optical signal received from the first optical circulator 250 of the donor 100 to the optical coupler 370 by transmitting it only in a desired transmission direction by means of isolation from other directions.

The optical coupler 370 separates a portion of the optical signal and re-transmits the portion of the optical signal to the time delay control module 115 of the donor 100 in the reverse direction of the transmission direction of the second optical circulator 345 in step S240. The first optical circulator 250 of the time delay control module 115 transmits the re-transmitted optical signal to the first optoelectric converter 260 in the reverse direction of the original transmission direction.

The re-transmitted optical signal is optoelectric converted to an electrical signal by the first optoelectric converter 260 of the time delay control module 115 in step S250, separated to the reference signal to measure the delay time of the optical cable and the switch control signal generated by the modem 110 to set the upstream or downstream RF signal path by the first signal separator 270, and transmitted to the time delay measurement module 170. The signal detector 190 of the time delay measurement module 170 detects the reference signal to measure the delay time of the optical cable in step 260.

The comparator 200 compares the transmission time of the reference signal re-transmitted from the remote 300 via the optical cable and detected by the signal detector 190 and the time of the reference signal generated based on the specific time by the reference signal generator 180 in step 270. If there is a time difference between the transmission time and the generation time, the time delay control signal generator 210 generates a time delay control signal according to the amount of a time delay and transmits the time delay control signal to the time delay compensator 220 in step 280.

In step 290, the time delay compensator 220 corrects time synchronization of the upstream and downstream RF signals transmitted and received via the antennas 20 and 315 and the first and second RF switches 40 and 310 of the BS and the remote 300, by compensating for a transmission time delay occurring in the optical cable with respect to the upstream and downstream RF signals of the BS and the switch control signal for the second RF switch 310 of the remote 300 according to the time delay control signal received from the time delay control signal generator 210.

If there is no time difference between the transmission time of the reference signal re-transmitted from the remote 300 via the optical cable and detected by the signal detector 190 and the generation time of the reference signal generated based on the specific time by the reference signal generator 180, which are compared by the comparator 200, time synchronization of the upstream and downstream RF signals transmitted and received via the antennas 20 and 315 and the first and second RF switches 40 and 310 of the BS and the remote 300 is maintained without any compensation.

As described above, according to the present invention, when an RoF system is used in TDD wireless communication, by reliably transmitting a switch control signal to a remote and simultaneously compensating for the transmission time delay occurring in an optical cable with respect to upstream and downstream RF signals of a BS and the switch control signal for a remote, time synchronization of upstream and downstream RF signals transmitted and received via antennas and RF switches of the BS and the remote is maintained, thereby efficiently increasing the performance of a TDD wireless service system.

While the invention has been shown and described with reference to a certain preferred embodiment thereof, it will be understood by those skilled in the art that various changes in form and details may be made therein without departing from the scope of the invention as defined by the appended claims.

## Claims

1. A Radio over Fiber, RoF, system having a base station coupled to a remote unit via an optical cable, comprising:
an antenna configured to transmit and receive upstream and downstream radio frequency signals;
a first radio frequency switch configured to selectively set an upstream or downstream radio frequency signal path;
a radio frequency transmit/receive amplifier configured to amplify the downstream radio frequency signal, reduce a noise component of the upstream radio frequency signal, and amplify a signal component of the upstream radio frequency signal when the downstream radio frequency signal path is set by the first radio frequency switch;
a time delay unit configured to delay the upstream or downstream radio frequency signal by compensating a synchronization of a transmission time of the upstream or downstream radio frequency signal; and
a modem configured to generate a switch control signal to be used to set the upstream or downstream radio frequency signal path,
wherein a donor of the base station transmits the switch control signal generated by the modem and the downstream radio frequency signal to the remote, receives the upstream radio frequency signal from the remote, and measures and controls a delay time of an optical signal transmitted via the optical cable, and
wherein the remote unit re-transmits a signal used to measure the delay time of the optical signal to the donor and sets a path of the upstream or downstream radio frequency signal according to the switch control signal received from the donor.

2. The RoF system of claim 1, wherein the donor comprises a time delay control module for controlling a transmission time of the upstream and downstream radio frequency signals transmitted and received between the base station and the remote unit, by measuring a generation time of a reference signal generated based on a specific time to measure the delay time of the optical signal and a transmission time of a signal re-transmitted from the remote.

3. The RoF system of claim 2, wherein the time delay control module comprises:
a time delay measurement module including:
a reference signal generator for generating the reference signal based on the specific time in order to measure the delay time of the optical cable;
a signal detector for detecting the reference signal from the signal re-transmitted from the remote;
a comparator for measuring and comparing a transmission time of the reference signal detected by the signal detector and the transmission time of the signal re-transmitted from the remote;
a time delay control signal generator generating a time delay control signal according to a time difference of the two signals compared by the comparator; and
a time delay compensator for compensating for the time delay occurring in the optical cable according to the time delay control signal.

4. The RoF system of claim 3, wherein the time delay control module further comprises:
a signal combiner for combining the reference signal generated by the reference signal generator and the switch control signal generated by the modem;
a first electrooptic converter for converting an electrical signal combined by the signal combiner to an optical signal;
a first optical circulator for isolating the optical signal input from the first electrooptic converter from directions different from a desired transmission direction;
a first optoelectric converter for converting the optical signal input from the first optical circulator to an electrical signal; and
a first signal separator for separating the reference signal to measure the delay time of the optical cable and the switch control signal generated by the modem from the electrical signal re-transmitted from the remote and
converted by the first optoelectric converter.

5. The RoF system of one of claims 1 to 4, wherein the donor comprises:
a first radio frequency receive amplifier for canceling a noise component and amplifying a signal component of the downstream radio frequency signal input from the time delay compensator;
a second electrooptic converter for converting the downstream radio frequency signal amplified by the first radio frequency receive amplifier to an optical signal;
a second optoelectric converter for converting an optical signal received from the remote to an upstream radio frequency signal;
a first radio frequency transmit amplifier for amplifying the upstream radio frequency signal converted by the second optoelectric converter to effective power; and
a first Wavelength Division Multiplexer/Demultiplexer, WDM, for multiplexing the optical signal converted by the second electrooptic converter by carrying a plurality of optical wavelengths on a single optical fiber or demultiplexing the optical signal received from the remote to a plurality of optical wavelengths.

6. The RoF system of claim 5, wherein the donor is coupled to a plurality of remotes via optical cables.

7. The RoF system of one of claims 1 to 6, wherein the remote comprises:
a second optical circulator for isolating the optical signal received from the donor from directions different from a desired transmission direction;
an optical coupler for outputting the optical signal in the desired direction from the second optical circulator without any change and separating a portion of the optical signal to re-transmit it to the donor;
a third optoelectric converter for converting the optical signal input from the optical coupler to an electrical signal; and
a switch detector for detecting the switch control signal from the electrical signal converted by the third optoelectric converter.

8. The RoF system of claim 7, wherein the remote unit further comprises:
a second radio frequency switch for setting the path of the upstream or downstream radio frequency signal received or transmitted via an antenna according to the switch control signal;
a second radio frequency receive amplifier for canceling a noise component and amplifying a signal component of the upstream radio frequency signal input according to the path set by the second radio frequency switch;
a third electrooptic converter for converting the upstream radio frequency signal amplified by the second radio frequency receive amplifier to an optical signal;
a fourth optoelectric converter for converting an optical signal received from the donor to a downstream radio frequency signal;
a second radio frequency transmit amplifier for amplifying the downstream radio frequency signal converted by the fourth optoelectric converter to effective power; and
a second WDM for multiplexing the optical signal converted by the third electrooptic converter by carrying a plurality of optical wavelengths on a single optical fiber or demultiplexing the optical signal received from the donor to a plurality of optical wavelengths.

9. A method of controlling the transmission time in a TDD wireless communication system having a base station coupled to a remote unit via an optical cable, the method comprising:
generating a switch control signal for setting a path of an upstream or downstream radio frequency signal transmitted or received between a donor of the base station and the remote and transmitting the switch control signal from the donor to the remote unit;
generating and transmitting a reference signal based on a specific time in order to measure a delay time of the optical cable;
combining the reference signal and the switch control signal;
converting the combined signal to an optical signal and transmitting the optical signal to the remote unit;
separating a portion of the optical signal and re-transmitting the portion of the optical signal to the donor;
converting the optical signal re-transmitted from the remote unit to an electrical signal;
detecting the reference signal by separating the reference signal to measure the delay time of the optical cable and the switch control signal from the electrical signal;
comparing a transmission time of the detected reference signal and a generation time of the reference signal generated based on a specific time;
if there is a time difference between the transmission time of the detected reference signal and the generation time of the reference signal generated based on the specific time, generating a time delay control signal according to the time difference between the two signals compared; and
controlling a time synchronization of the upstream and downstream radio frequency signals transmitted and received between the base station and the remote by compensating for a transmission time delay occurring in the optical cable according to the time delay control signal.

10. The method of claim 9, further comprising:
if there is no time difference between the two signals, controlling the time synchronization of the upstream and downstream radio frequency signals transmitted and received between the base station and the remote without any compensation.
